# EUROPEAN PATENT APPLICATION

(11) **EP 1 207 504 A2**
(43) Date of publication of application: **22.05.2002**
(21) Application number: 01203957.4
(22) Date of filing: 16.10.2001
(51) Int. Cl.: G07F 9/02, G07F 9/00

(54) **Payment system for automatic vending machines**

(30) Priority: 18.10.2000 IT MI002248
(71) Applicant: Officine Meccaniche F.lli Manea S.r.l., 36010 Zane' (Vicenza) (IT)
(72) Inventor: Nicolini, Antonio, 36015 Schio (Vincenza) (IT)
(74) Representative: De Gregori, Antonella

(57) **Abstract**

A payment system for automatic vending machines is characterized in that it comprises at least one microprocessor or electronic chip (10), which can be suitably programmed so as to univocally identify the fingerprints (30) of each user of said machines, by memorization in memory elements (40) and comparison of certain scanning points of their images to effect electronic identification.

## Description

The present invention relates to a payment system for automatic vending machines.

In modern automated vending systems, access to the machines and purchases are effected by means of traditional payment systems.

In particular, payment is made by depositing an amount, in banknotes and/or coins, equal to the value of the product selected, which must be inserted into the machine through specific token-dispensers or other devices for detecting the validity of the banknotes.

Alternatively, payment is effected by means of electronic mediums for prepaid amounts, such as rechargeable keys (with or without contact) and/or magnetic cards.

These traditional payment systems, however, have numerous drawbacks: first of all, one of the main problems is, without a doubt, represented by the ease with which banknotes and other payment mediums can be counterfeited.

Another disadvantage is the possibly of losing the medium, when magnetic credit systems are used.

Finally, among problems relating to the systems currently in use, the encumbrance and limited availability of coins, when coin payment systems are used, can be mentioned.

An object of the present invention is therefore to create a payment system for automatic vending machines which eliminates the necessity for all types of mediums for the purchase of products.

A further object of the present invention is to indicate a payment system for automatic vending machines which allows customers to avoid forgetting or losing their payment mediums.

Yet another object of the present invention is to create a payment system for automatic vending machines which protects the machine managers from losing their takings, as a result of possible counterfeits of physical supports or banknotes used for effecting payment.

An additional object of the present invention is to indicate a payment system for automatic vending machines which avoids troublesome time-wasting, for example during the distribution of contact mediums or magnetic cards which currently require payment, as in the case of keys which have a initial cost at the user's expense.

The last but not least important object of the invention is to create a payment system for automatic vending machines which is extremely reliable, simple to effect and economic, with respect to the known art, due to the advantages obtained.

These and other objects are achieved by a payment system for automatic vending machines, according to claim 1, to which reference should be made for the sake of brevity.

Other important technical characteristics are indicated in the subsequent claims.

The system according to the present invention advantageously and totally eliminates the possibility of counterfeiting coins, banknotes or electric and/or magnetic mediums, on the part of the user, and, at the same time, avoids the use of any type of payment medium, thus completely eliminating the encumbrance of these devices, the necessity of having to carry them around and the possibility of losing them.

Furthermore, there are no longer disadvantages deriving from the possible demagnetization of scale-down magnetic cards and, in general, the malfunctioning of credit and residual credit reading devices; finally, the necessity of having to effect cash payment is completely eliminated, thus avoiding further problems to the user due to the limited availability of coins and banknotes of certain denominations, undamaged, suitably intact and not in excessively bad condition.

Additional characteristics and advantages of the present invention are clearly evident from the following description, relating to a preferred but nonlimiting example, and the enclosed drawings, wherein:

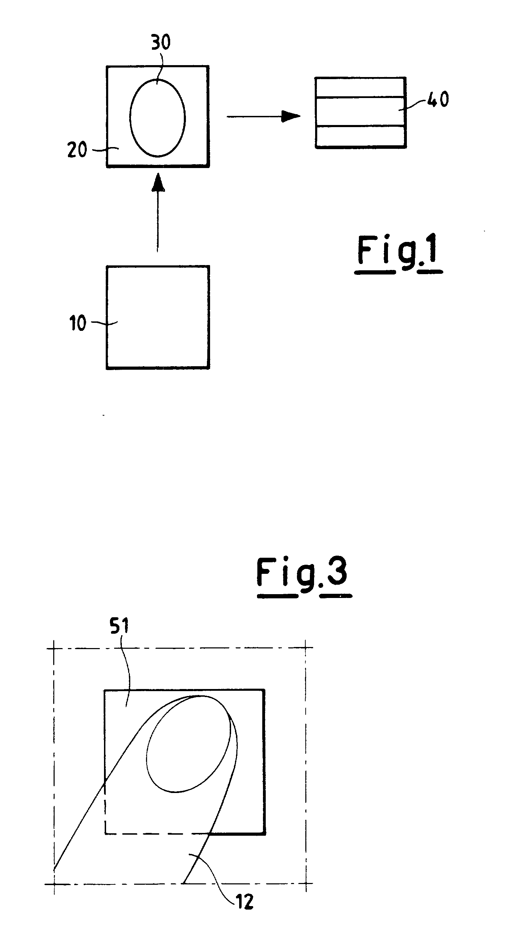

- figure 1 is a general block scheme of a first operating phase effected by means of the payment system for automatic vending machines, according to the present invention;
- figure 2 is a general block scheme, which represents a second operating phase effected using the payment system for automatic vending machines, according to the present invention;
- figure 3 is a partial schematic view of a purchase phase, on the part of an user, at an automated vending terminal, according to the payment system described in the present invention.

With reference to the above figures, 10 schematically indicates a micro-processor or electronic chip suitable for identifying the fingerprints of each user of an automatic vending machine, 20 generally indicates an electronic acquisition device for each fingerprint 30, whereas 40 indicates a memory cell for the memorization of digital images relating to said fingerprints 30.

Furthermore, 50 indicates in general a push-button device for selecting the products, comprising a series of keys 52, whereas 51 indicates a particular key which can be used for controlling the remaining credit, by pressing the fingertip, indicated by 12 in figure 3, of which the fingerprint 30 has been memorized.

In practice, the payment system for automatic vending machines, according to the present invention, refers to the application of the electronic chip 10, which, when suitably programmed, is capable of identifying the fingerprints 30 of each user of the automatic vending machine, memorizing them in memory cells 40 and subsequently comparing certain electronic scanning points of their memorized image for electronic identification, when checking the residual credit and/or selection of the desired product.

The specific use of the system according to the invention therefore allows an impersonal memorized fingerprint 30 to be associated with the corresponding price of the product selected, progressively scaling down the value on the basis of the products consumed.

The process according to the invention enables the classification and automatic identity search of users' fingerprints 30, also allowing memorization in a memory 40 and the identity search of the fingerprints of the various users of the automatic vending machine.

The process is compatible with the normal electronic image-scanning systems and uses visual or opto-electronic acquisition methods and encodes the macroscopic characteristics relating to the geometric form of the fingerprint 30; in addition, it can also allow for statistic errors deriving from printing distortions, scanning errors, skin abrasions, etc.

In preferred, but non-limiting, embodiments of the invention, the electronic chip 10 is housed in the automatic vending machine and remains continuously activated.

In particular, when a user decides to recharge his credit, after inserting the money in the specific compartments of the machine, the chip 10 transmits the fingerprint reading data 30 to the memory base 40, which acts as an archive, associating the amount paid with the corresponding digital image of the fingerprint 30, which is present in its cells.

This operation, above all, entirely protects the privacy of the user, as neither names nor photographic images of the client are associated with the credit information.

Whenever the client wishes to use the automatic vending machine, he simply has to check his remaining credit by pressing his fingertip 12, whose fingerprint has been memorized, on the key 51.

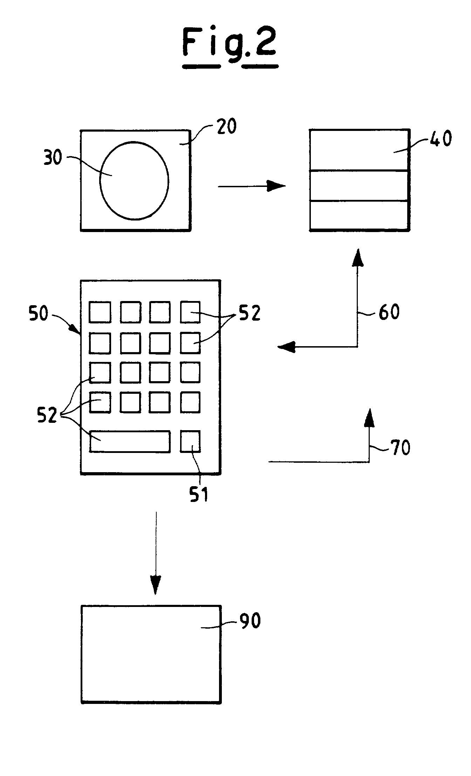

On selecting the pre-chosen product by means of an electronic identification operation of certain scanning points of the image (operation schematically indicated with 60 in figure 2), the product is then ejected from the machine (indicated with 90 in figure 2), against a debit (indicated with 70 in figure 2) on the part of the user in question, identified by means of his fingerprint 30.

The characteristics as also the advantages of the payment system for automatic vending machines, object of the present invention, are evident from the description.

Finally, numerous variations can obviously be applied to the payment system in question, without excluding any of the novelty principles which characterize the inventive idea illustrated, and it is also evident that, in the embodiment of the invention, the materials, forms and dimensions of the details illustrated can vary according to the demands and can be substituted with other technically equivalent alternatives.

## Claims

1. A payment system for automatic vending machines, **characterized in that** it comprises at least one micro-processor or electronic chip (10), which can be suitably programmed so as to univocally identify the fingerprints (30) of each user of said machines, by memorization in memory elements (40) and comparison of certain scanning points of their images to effect electronic identification.

2. The payment system according to claim 1, **characterized in that** said memorized fingerprints (30) are associated with a price corresponding to the product selected by said user, by means of a push-button device (52), so as to progressively scale down its value (70) on the basis of the products consumed (90).

3. The payment system according to claim 1, **characterized in that** said fingerprints (30) are acquired by means of an electronic acquisition apparatus (20) and identification and comparison procedure (60).

4. The payment system according to claim 2, **characterized in that** said push-button device (52) comprises at least one key (51) for controlling the remaining credit, by the pressing of at least one fingertip, whose fingerprint (30) has been memorized.

5. The payment system according to claim 1, **characterized in that** said fingerprints (30) are acquired by means of an electronic processing of the images relating to the geometric form of the fingerprint (30).

6. The payment system according to claim 1, **characterized in that** said micro-processor (10) transmits the reading data of said fingerprints (30) to said memory (40), which acts as an archive, associating the amounts paid by said users to the digital images of the fingerprints (30) corresponding to said users.
